# FASCICULE DE BREVET EUROPEEN

(11) **EP 3 274 218 B1**
(45) Date de publication et mention de la délivrance du brevet: **10.04.2019**
(21) Numéro de dépôt: 16709786.4
(22) Date de dépôt: 14.03.2016
(51) Int. Cl.: B60S 1/34, B60S 1/38, B60S 1/40

(54) **CHAPE POUR BRAS D'ENTRAÎNEMENT D'UN BALAI D'ESSUIE-GLACE**
HALTERUNG FÜR DEN ANTRIEBSARM EINES SCHEIBENWISCHERBLATTES
HOLDER FOR DRIVE ARM OF A WINDSCREEN-WIPER BLADE

(30) Priorité: 24.03.2015 FR 1552422
(43) Date de publication de la demande: 31.01.2018
(73) Titulaire: Valeo Systèmes d'Essuyage, 78322 Le Mesnil Saint Denis (FR)
(72) Inventeur: CAILLOT, Gérald, 787322 le Mesnil Saint-Denis cedex (FR)
(74) Mandataire: Valeo Systèmes d'Essuyage
(86) Numéro de dépôt international: PCT/EP2016/055411
(87) Numéro de publication internationale: WO 2016/150739

(56) Documents cités:
- EP-A1- 2 460 700
- EP-A1- 2 803 542
- EP-A2- 2 803 544

## Description

### DOMAINE TECHNIQUE

La présente invention concerne un bras à chape pour l'entraînement d'un balai d'essuie-glace de véhicule, en particulier automobile.

### ETAT DE L'ART

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entrainement, effectuant un mouvement de va-et-vient angulaire, et des balais allongés, porteurs eux-mêmes de lames d'essuyage réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame d'essuyage en plusieurs endroits discrets en lui conférant un cintrage lui permettant d'épouser l'éventuelle courbure du pare-brise, soit, dans une version plus récente dénommée *"flat blade"* (pour "lame plate"), d'un ensemble semi-rigide qui maintient la lame d'essuyage sur toute sa longueur grâce à une ou des vertèbres de cintrage permettant d'appliquer le balai sur le pare-brise sans avoir à utiliser d'étriers.

Dans les deux solutions, le balai est rattaché au bras d'entraînement par un système de connexion comportant un connecteur et un adaptateur. Le connecteur est une pièce qui est fixée directement sur la lame d'essuyage ou directement sur la lame plate alors que l'adaptateur est une pièce intermédiaire qui permet la liaison et la fixation du connecteur sur le bras d'entraînement. Ces deux pièces sont reliées l'une à l'autre par un axe transversal d'articulation qui autorise leur rotation relative, dans un plan perpendiculaire au pare-brise et passant par le bras. L'adaptateur est en outre configuré pour être engagé dans une tête ou pièce terminale en forme de chape du bras d'entraînement.

Typiquement, un bras à chape comprend une partie de liaison de forme générale allongée et comportant une extrémité longitudinale intérieure destinée à être reliée à un moyen d'entraînement du bras, tel qu'un moteur électrique, par l'intermédiaire d'un entraîneur par exemple, et une extrémité longitudinale extérieure reliée à la pièce terminale formant la chape de fixation au balai d'essuie-glace. La pièce terminale a une forme générale allongée et comporte une extrémité longitudinale extérieure et une extrémité longitudinale intérieure qui est destinée à être située du côté du moyen d'entraînement.

Dans la technique actuelle, l'extrémité longitudinale extérieure de la partie de liaison est reliée à l'extrémité longitudinale intérieure de la pièce terminale. Autrement dit, la pièce terminale s'étend longitudinalement vers l'extérieur dans le prolongement de la partie de liaison. Cette configuration présente des inconvénients, en particulier en ce qui concerne l'aérodynamisme du bras.

Dans le cas d'un essuie-glace situé du côté du conducteur du véhicule par exemple, l'essuie-glace reçoit un flux d'air en fonctionnement qui est sensiblement perpendiculaire à la direction longitudinale de l'essuie-glace. Le flux d'air s'écoule au-dessus du balai d'essuie-glace, qui comprend en général un déflecteur aérodynamique favorisant le plaquage du balai contre le pare-brise. La portion d'extrémité extérieure de la partie de liaison du bras qui est reliée à la pièce terminale gêne le passage du flux d'air dans cette zone, et génère des perturbations dans ce flux d'air, même si le bras est profilé pour limiter ces perturbations. On a constaté que cette portion d'extrémité génère un niveau de portance du bras tel qu'il se traduit par un soulèvement du balai en fonctionnement et donc une perte d'efficacité de l'essuyage du pare-brise.

Le document EP 2 460 700 A1 montre une chape pour bras d'entraînement d'un balai d'essuie glace selon le préambule de la première revendication.

La présente invention propose une solution simple, efficace et économique à ce problème.

### EXPOSE DE L'INVENTION

La présente invention concerne une chape pour bras d'entrainement d'un balai d'essuie-glace de véhicule, en particulier automobile, ladite chape comportant :
- une partie de liaison de forme générale allongée et comportant une extrémité longitudinale intérieure destinée à être reliée à un moyen d'entraînement du bras et une extrémité longitudinale extérieure
- une pièce terminale de forme générale allongée et comportant une extrémité longitudinale extérieure et une extrémité longitudinale intérieure qui est destinée à être située du côté dudit moyen d'entraînement, caractérisée en ce que l'extrémité longitudinale extérieure de ladite partie de liaison est reliée à ladite pièce terminale, dans une zone qui est écartée en direction longitudinale de ladite extrémité longitudinale intérieure de la pièce terminale.

La zone de liaison de la partie à la pièce terminale est ainsi déportée longitudinalement vers l'extérieur par rapport à la technique antérieure, ce qui peut permettre de limiter les perturbations du flux d'air évoquées dans ce qui précède. Elle peut en outre permettre de réduire la dimension longitudinale de la pièce terminale et donc limiter son influence sur les perturbations du flux d'air. Elle peut enfin permettre d'améliorer l'interaction bras - balai dans cette zone et de réduire la portance de cette zone.

Le bras selon l'invention peut comprendre une ou plusieurs des caractéristiques suivantes, prises isolément les unes des autres ou en combinaison les unes avec les autres :
- ladite zone est située sensiblement au milieu, sur une moitié extérieure, sur un quart extérieur ou à l'extrémité extérieure de la pièce terminale, lorsque l'on considère la direction longitudinale de cette pièce,
- ladite zone est écartée en direction longitudinale de ladite extrémité longitudinale extérieure de la pièce terminale,
- la pièce terminale comprend deux parois longitudinales latérales ont les bords longitudinaux supérieurs sont reliés entre eux par une paroi transversale supérieure, ladite zone étant située sur l'une desdites parois longitudinales latérales,

- lesdites parois longitudinales latérales définissent entre elles un logement configuré pour recevoir au moins une partie d'un système de connexion du bras audit balai,
- ledit logement débouche en direction longitudinale sur l'extrémité longitudinale intérieure ou l'extrémité longitudinale extérieure de la pièce terminale,
- ledit logement est fermé à l'extrémité longitudinale extérieure ou à l'extrémité longitudinale intérieure de la pièce terminale, notamment par une paroi extérieure reliant des bords extérieurs desdites parois longitudinales latérales et transversale supérieure,
- ladite partie de liaison comprend une portion d'extrémité extérieure reliée à ladite pièce terminale, et dans lequel cette portion d'extrémité extérieure est située sensiblement en dessous d'un plan dans lequel s'étend ladite paroi supérieure de la pièce terminale,
- ladite portion d'extrémité extérieure a une forme générale courbe ou en forme de L,
- ladite pièce terminale comprend au moins un orifice configuré pour recevoir, par exemple par encliquetage élastique, un bouton poussoir d'un système de connexion du bras audit balai,
- ledit au moins un orifice est un orifice supérieur ou situé sur une paroi supérieure de la pièce terminale,
- ledit au moins un orifice est un orifice latéral ou situé sur une paroi latérale de la pièce terminale,
- ledit au moins un orifice est notamment situé sensiblement au droit de ladite zone, ou est décalé longitudinalement vers l'intérieur de ladite zone,
- ladite pièce terminale comprend au moins une encoche latérale configurée pour coopérer par exemple par encliquetage élastique, avec une portion d'engagement d'un système de connexion du bras audit balai,
- ladite pièce terminale comprend au moins un doigt ou crochet extérieur configuré pour être engagé dans un logement d'un système de connexion du bras audit balai, et
- la chape est réalisée d'une seule pièce avec une tige et un carter, par exemple formée par emboutissage, soudage de tôles ou par moulage.

La présente invention concerne également un bras comportant une chape telle que décrite précédemment.

La présente invention concerne en outre un ensemble comportant un bras tel que décrit précédemment et un système de connexion dudit bras à un balai d'essuie-glace, le système de connexion comportant notamment deux organes articulés l'un sur l'autre autour d'un axe d'articulation, dans lequel ledit axe d'articulation est situé sensiblement au droit de ladite zone, ou est décalé longitudinalement vers l'intérieur de ladite zone.

La présente invention concerne encore un essuie-glace de véhicule, en particulier automobile, comportant un balai d'essuie-glace et un bras tel que décrit ci-dessus.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- la figure 1 est une vue schématique en perspective d'un essuie-glace selon l'art antérieur,
- la figure 2 est une vue schématique en perspective et à plus grande échelle de la pièce terminale du bras d'entraînement du système d'essuie-glace de la figure 1,
- la figure 3 est une vue schématique partielle en perspective d'un essuie-glace selon l'invention,
- la figure 4 est une vue schématique en perspective et à plus grande échelle de la chape du bras de l'essuie-glace de la figure 3,
- la figure 5 est une vue correspondant à celle de la figure 4 et représentent une variante de réalisation de la chape du bras selon l'invention,
- la figure 6 est une vue schématique partielle en perspective d'un essuie-glace de l'art antérieur,
- la figure 7 est une vue schématique partielle en perspective d'un essuie-glace selon l'invention, et
- la figure 8 est une vue schématique partielle en perspective de la chape de l'essuie-glace de la figure 7.

### DESCRIPTION DETAILLEE

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace ou du bras d'entraînement. La direction longitudinale correspond à l'axe principal du balai ou du bras dans lequel il s'étend, alors que les orientations latérales correspondent à des droites concourantes, c'est-à-dire qui croisent la direction longitudinale, notamment perpendiculaires à l'axe longitudinal du balai ou du bras dans son plan de rotation. Pour les directions longitudinales, les dénominations extérieure ou intérieure s'apprécient par rapport au point de fixation du balai sur le bras, la dénomination intérieure par rapport au point de fixation du bras au véhicule correspondant notamment à une partie où le bras et un demi-balai s'étendent. Les directions référencées comme supérieures ou inférieures correspondent à des orientations perpendiculaires au plan de rotation du balai d'essuie-glace, la dénomination inférieure contenant le plan du pare-brise. Enfin, la dénomination horizontale fait référence à une direction ou autre sensiblement parallèle au pare-brise, et la dénomination verticale faire référence à une direction ou autre sensiblement perpendiculaire au pare-brise.

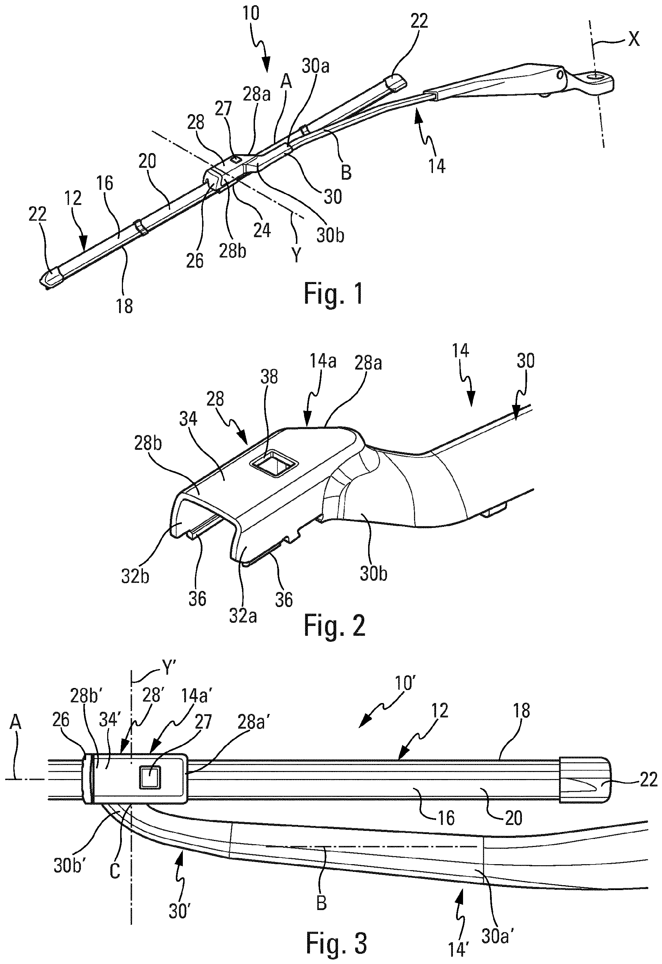

Il est illustré à la figure 1 un essuie-glace 10 comportant notamment un balai 12 et un bras 14 d'entraînement du balai 12.

Le balai 12 est de préférence du type flat blade et comprend un corps longitudinal 16, une lame d'essuyage 18, en général en caoutchouc, et au moins une vertèbre (non visible) qui rigidifie la lame et favorise son application sur un pare-brise de véhicule.

Le corps 16 du balai 12 peut comporter un déflecteur aérodynamique supérieur 20 destiné à améliorer le fonctionnement du système d'essuyage, le but de ce déflecteur étant d'améliorer le plaquage du balai sur le pare-brise et donc la performance aérodynamique de l'essuie-glace.

Le balai 12 peut comprendre en outre des embouts 22 ou agrafes d'accrochage de la lame 18 et de la vertèbre sur le corps 16, ces embouts 22 étant situés à chacune des extrémités longitudinales du corps 16.

Le balai 12 comprend sensiblement en son milieu un connecteur 24 intermédiaire. Un adaptateur 26 solidaire du bras 14 est monté sur le connecteur 24 de façon à garder un degré de liberté en pivotement autour d'un axe d'articulation Y qui est un axe transversal sensiblement perpendiculaire à l'axe longitudinal du balai 12. Ce degré de liberté autorise un pivotement du balai 12 vis-à-vis du bras 14 et permet ainsi au balai de suivre la courbure du pare-brise lors de ses déplacements. L'adaptateur 26 peut être désolidarisé du bras 14 par appui sur un bouton poussoir 27 porté par l'adaptateur.

Le bras 14 est destiné à être entraîné par un moteur électrique autour d'un axe pour suivre un mouvement angulaire de va-et-vient permettant d'évacuer l'eau et éventuellement d'autres éléments indésirables recouvrant le pare-brise. L'adaptateur 26 assure la liaison du balai 12 au bras 14 et en particulier à une chape 14a du bras qui peut être formée d'une seule pièce avec le bras ou rapportée et fixée sur celui-ci.

La chape 14a comprend une pièce terminale 28 et une partie de liaison 30 reliées ensemble.

La pièce terminale 28, mieux visible en figure 2, a en section transversale une forme sensiblement en U.

La pièce terminale 28 a une forme allongée dont l'axe d'allongement A est en général sensiblement parallèle à l'axe d'allongement ou longitudinal du balai 12.

La partie de liaison 30 sert à relier la chape 14a au reste du bras 14, par exemple par sertissage. Cette partie de liaison 30 a une forme générale allongée et s'étend le long d'un axe B sensiblement parallèle à l'axe A et à distance de cet axe, comme cela est visible aux figures 1 et 2. La partie de liaison 30 est reliée à une extrémité arrière ou intérieure du reste du bras.

On définit par l'extrémité longitudinale intérieure 30a de la partie de liaison 30 du bras comme étant l'extrémité longitudinale de cette partie orientée du côté du moteur électrique ou de l'axe de rotation X. On définit par l'extrémité longitudinale extérieure 30b de la partie de liaison 30 comme étant l'extrémité longitudinale opposée de cette partie. De la même manière, on définit par l'extrémité longitudinale intérieure 28a de la pièce terminale 28 du bras comme étant l'extrémité longitudinale de cette partie orientée du côté du moteur, et son extrémité longitudinale extérieure 28b comme étant l'extrémité longitudinale opposée de cette partie. Ces définitions sont valables pour l'ensemble des essuie-glaces décrits dans la présente demande.

La pièce terminale 28 comprend deux parois longitudinales latérales 32a, 32b dont les bords longitudinaux supérieurs sont reliés entre eux par une paroi transversale supérieure 34. Les parois 32a, 32b, 34 délimitent entre elles un logement de réception de l'adaptateur 26. Les parois 32a, 32b comprennent au niveau de leurs bords longitudinaux inférieurs des moyens 36, tels que des crochets, de retenue de l'adaptateur 26 dans le logement précité. Ce logement est débouchant au niveau de l'extrémité longitudinale extérieure de la pièce terminale 28 et, bien que cela ne soit pas visible dans les dessins, est fermé au niveau de l'extrémité longitudinale intérieure de la pièce terminale 28.

La paroi supérieure 34 comprend un orifice 38 traversant de forme complémentaire d'un bouton poussoir 27. En position de montage, le bouton poussoir 27 est logé dans cet orifice 38 et peut traverser ce dernier de façon à être en saillie sur la face supérieure de la paroi 34. Le montage du bouton poussoir 27 dans l'orifice 38 se fait par simple engagement ou emboîtement.

Comme on le voit à la figure 2, l'extrémité extérieure 30b de la partie de liaison 30 est reliée à l'extrémité intérieure 28a de la pièce terminale 28, ce qui entraîne des perturbations aérodynamiques lors de l'utilisation de l'essuie-glace, qui ont été évoquées plus haut.

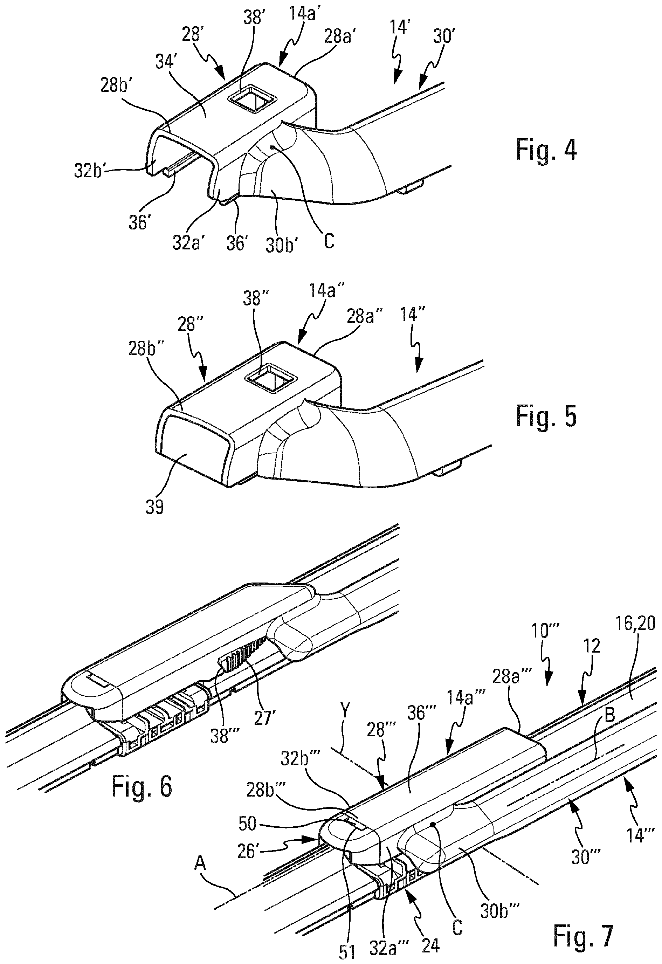

Selon la présente invention, l'extrémité longitudinale extérieure 30b de la partie de liaison 30 du bras est reliée à la pièce terminale 28, dans une zone qui est écartée en direction longitudinale de l'extrémité longitudinale intérieure 30a de la pièce terminale. Les figures 3 et 4 représentent un premier mode de réalisation de l'invention dans lesquels les éléments déjà décrits dans ce qui précède sont désignés par les mêmes références.

La figure 3 montre un essuie-glace 10' dont le balai 12 peut être similaire à celui décrit dans ce qui précède en relation avec la figure 1.

Le bras 14' représenté aux figures 3 et 4 comprend une pièce terminale 28' et une partie de liaison 30'. La pièce terminale 28' forme une chape 14a' à section transversale sensiblement en U.

La pièce terminale 28' a une forme allongée dont l'axe d'allongement A est en général sensiblement parallèle à l'axe d'allongement ou longitudinal du balai 12. La partie de liaison 30' permet de relier la pièce terminale 28' au reste du bras 14', par exemple par sertissage. Il peut aussi s'agir d'un "carter de style" qui comprend directement la partie 28' et la pièce 30'. Cette partie de liaison 30' a une forme générale allongée et s'étend le long d'un axe B sensiblement parallèle à l'axe A et à distance de cet axe. La partie de liaison 30' est reliée à une extrémité arrière ou intérieure du reste du bras.

La pièce terminale 28' comprend deux parois longitudinales latérales 32a', 32b' dont les bords longitudinaux supérieurs sont reliés entre eux par une paroi transversale supérieure 34'. Les parois 32a', 32b', 34' délimitent entre elles un logement de réception de l'adaptateur 26. Les parois 32a', 32b' comprennent au niveau de leurs bords longitudinaux inférieurs des moyens 36', tels que des crochets, de retenue de l'adaptateur 26' dans le logement précité. Ce logement est débouchant au niveau de l'extrémité longitudinale extérieure de la pièce terminale 28' et de préférence également au niveau de son extrémité longitudinale intérieure.

La paroi supérieure 34' comprend un orifice 38' traversant de forme complémentaire du bouton poussoir 27. En position de montage, le bouton poussoir 27 est logé dans cet orifice 38' et peut traverser ce dernier de façon à être en saillie sur la face supérieure de la paroi 34'. Le montage du bouton poussoir 27 dans l'orifice 38' se fait par simple engagement ou emboîtement.

Comme on le voit aux figures 3 et 4, l'extrémité extérieure 30b' de la partie de liaison 30' est reliée à la pièce terminale 28' dans une zone C qui est écartée longitudinalement de l'extrémité intérieure 28a' de la pièce terminale 28'.

Dans l'exemple représenté, la zone C est également écartée longitudinalement de l'extrémité extérieure 28b' de la pièce terminale 28'.

Dans l'exemple représenté, cette zone C est située sur l'une des parois latérales 32a' de la pièce terminale 28'. Autrement dit, la partie de liaison 30' est reliée à la pièce terminale 28' par sa paroi latérale 32a', et ici sensiblement au milieu de cette paroi latérale (en direction longitudinale). Elle pourrait être reliée à la moitié extérieure de la paroi latérale 32a', au quart extérieur de la paroi latérale 32a', voire à l'extrémité extérieure de cette paroi.

De plus, comme on peut l'apprécier à la figure 4, l'extrémité extérieure 30b' de la partie de liaison 30' est située sensiblement en dessous d'un plan dans lequel s'étend la paroi supérieure 34' de la pièce terminale 28'...

La portion d'extrémité extérieure a ici une forme courbe, concave vers l'intérieur du système d'essuyage.

L'orifice 38' est sensiblement décalé longitudinalement vers l'intérieur, comme cela est mieux visible en figure 3. On voit par ailleurs dans cette figure que l'axe d'articulation Y est situé sensiblement au droit de la zone C.

Dans un exemple particulier de réalisation de l'invention, la partie de liaison 30' et la pièce terminale 28' sont ici formées d'une seule pièce, par exemple par emboutissage et soudage de tôles. Comme on l'a vu précédemment, d'autres modes de réalisation sont envisageables à ce sujet.

L'invention permet ainsi d'amener la zone C le plus proche possible de l'extrémité extérieure de la paroi latérale 32a', pour créer de préférence une forme de déflecteur aérodynamique sur toute la longueur de la pièce terminale 28, et éviter le « plat » vertical de la paroi verticale 32a de la chape 14a de la figure 2, qui pénalise la performance aérodynamique du bras (car elle forme un mur face au flux d'air en fonctionnement). Elle permet en outre de réduire la perturbation de ce flux d'air au niveau de la liaison de la partie basse du balai avec la connexion centrale, à cause de la présence de l'extrémité 30b', qui va avoir tendance à « déventer » le balai.

Le montage du balai sur le bras 14' peut être effectué de la façon suivante. La pièce terminale 28' est disposée sur l'adaptateur 26 du système de connexion au balai 12, et est inclinée vis-à-vis de cet adaptateur de sorte que l'extrémité longitudinale extérieure 28b' de la pièce terminale 28' soit la plus proche de l'adaptateur et coopère en premier avec l'adaptateur. L'extrémité longitudinale intérieure 28a' de la pièce terminale est alors rabattue sur l'adaptateur pour achever l'accouplement et entraîner l'engagement du bouton poussoir dans l'orifice 38', par encliquetage élastique. L'adaptateur 26 comprend une partie appelée tête ou casquette qui peut être située en avant ou à l'extérieur de la pièce terminale 28'.

En variante, le balai 12 peut être monté par translation longitudinale de l'adaptateur 26 dans la pièce terminale 28' du bras, depuis l'extérieur vers l'intérieur.

La variante de réalisation de la figure 5 diffère du mode de réalisation des figures 3 et 4 essentiellement en ce que le logement de la pièce terminale du 28" du bras 14" est fermé au niveau de son extrémité longitudinale extérieure 28b". Son extrémité longitudinale intérieure 28a" est au contraire de préférence ouverte, en particulier pour faciliter ou autoriser le montage de l'adaptateur dans le logement. La pièce terminale 28" forme avec une partie de liaison 30" une chape 14a" du bras 14".

Le montage du balai sur le bras 14" peut être effectué de la façon suivante. La pièce terminale 28" est disposée sur l'adaptateur du système de connexion au balai 12, et est inclinée vis-à-vis de cet adaptateur de sorte que l'extrémité longitudinale intérieure 28a" de la pièce terminale 28" soit la plus proche de l'adaptateur et coopère en premier avec l'adaptateur. L'extrémité longitudinale extérieure 28b" de la pièce terminale est alors rabattue sur l'adaptateur pour achever l'accouplement et entraîner l'engagement du bouton poussoir dans l'orifice 38", par encliquetage élastique. La paroi transversale extérieure 39 s'étend alors en avant ou à l'extérieur de l'adaptateur.

En variante, le balai 12 peut être monté par translation longitudinale de l'adaptateur dans la pièce terminale 28" du bras, depuis l'intérieur vers l'extérieur.

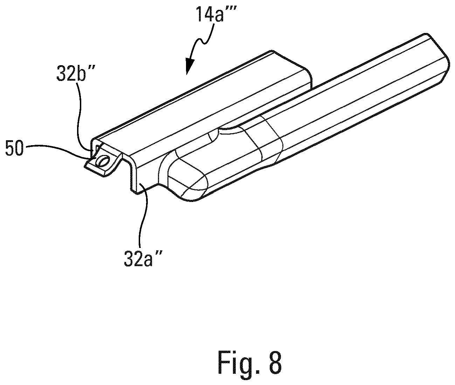

Les figures 7 et 8 représentent une autre variante de réalisation de l'invention qui est à comparer à la technique antérieure représentée en figure 6.

La figure 7 montre un essuie-glace 10"' dont le balai 12 peut être similaire à celui décrit dans ce qui précède en relation avec la figure 1.

Le bras 14"' comprend une chape 14a"' comportant une pièce terminale 28"' et une partie de liaison 30"'. La chape 14a"' a en section transversale une forme sensiblement en U.

La pièce terminale 28"' a une forme allongée dont l'axe d'allongement A est en général sensiblement parallèle à l'axe d'allongement ou longitudinal du balai 12. La partie de liaison 30"' permet de relier la pièce terminale 28"' au reste du bras 14"', par exemple par sertissage.

Cette partie de liaison 30"' a une forme générale allongée. Elle s'étend le long d'un axe B sensiblement parallèle à l'axe A et à distance de cet axe

La partie de liaison 30"' relie la pièce terminale 28"' à une extrémité arrière ou intérieure du bras destinée à être reliée à un moyen d'entraînement du bras.

La pièce terminale 28"' comprend deux parois longitudinales latérales 32a"', 32b"' dont les bords longitudinaux supérieurs sont reliés entre eux par une paroi transversale supérieure 34"'. Les parois 32a"', 32b"', 34"' délimitent entre elles un logement de réception de l'adaptateur 26'. Les parois 32a"', 32b"' comprennent au niveau de leurs bords longitudinaux inférieurs des moyens, tels que des crochets, de retenue de l'adaptateur 26' dans le logement précité. Ce logement est débouchant au niveau de l'extrémité longitudinale extérieure de la pièce terminale 28"' et de préférence également au niveau de son extrémité longitudinale intérieure.

L'extrémité extérieure 30b"' de la partie de liaison 30"' est reliée à la pièce terminale 28"' dans une zone C qui est écartée longitudinalement de l'extrémité intérieure 28a"' de la pièce terminale 28"'. Dans l'exemple représenté, la zone C est également écartée longitudinalement de l'extrémité extérieure 28b"' de la pièce terminale 28"'.

Dans l'exemple représenté, cette zone C est située sur l'une des parois latérales 32a"' de la pièce terminale 28"'. Autrement dit, la partie de liaison 30"' est reliée à la pièce terminale 28"' par sa paroi latérale 32a"', et ici sensiblement au voisinage de l'extrémité 28b"' de cette paroi latérale (en direction longitudinale). La partie de liaison 30" est ici reliée au milieu de cette paroi latérale 32a" (en direction longitudinale). Elle pourrait être reliée à la moitié extérieure de la paroi latérale 32a', au quart extérieur de la paroi latérale 32a', voire à l'extrémité extérieure de cette paroi. Comme indiqué précédemment, le but est d'amener la zone C le plus proche possible de l'extrémité extérieure de 32a', pour créer une forme de déflecteur aérodynamique sur toute la longueur de la pièce terminale 28', et éviter le plat de la paroi latérale 32a de la chape de la technique antérieure, qui pénalise la performance aérodynamique du bras.

L'extrémité extérieure de la partie de liaison est située sensiblement en dessous d'un plan dans lequel s'étend la paroi supérieure 34"' de la pièce terminale 28"'. Cette portion d'extrémité extérieure a ici une forme générale sensiblement en L.

Les parois 32a"', 32b"' de la pièce terminale 28"' comprennent chacune une encoche latérale 38"' au niveau de leurs bords longitudinaux inférieurs, ces encoches étant visibles dans la figure 6 et cachées par la partie de liaison 30"' dans la figure 7. Elles sont configurées pour coopérer par encliquetage élastique avec des portions d'engagement 27' de pattes flexibles de l'adaptateur 26'. La coopération des portions d'engagement 27' avec les encoches 38"' assure une fonction de sécurisation, qui fournit une connexion durable du balai au bras. En variante, les encoches pourraient être remplacées par de simples arêtes de coopération, par exemple par appui, avec les portions d'engagement 27' des pattes flexibles. Ces encoches 38"' sont sensiblement décalées longitudinalement vers l'intérieur de la zone C, ce qui explique qu'elles soient cachées par la partie de liaison 30"' en figure 7. On voit par ailleurs dans la figure 7 que l'axe d'articulation Y est situé sensiblement au droit de la zone C.

La paroi supérieure 34"' de la pièce terminale 28"' comprend à son extrémité extérieure un doigt ou crochet 50 destiné à coopérer par engagement avec un logement 51 de l'adaptateur 26' (figures 7 et 8).

La partie de liaison 30"' et la pièce terminale 28"' sont ici formées d'une seule pièce, par exemple par emboutissage et soudage de tôles.

Le montage du balai 12 sur le bras 14"' peut être effectué de la façon suivante. La pièce terminale 28"' est disposée sur l'adaptateur 26' du système de connexion au balai 12, et est inclinée vis-à-vis de cet adaptateur de sorte que l'extrémité longitudinale extérieure 28b"' de la pièce terminale 28"' soit la plus proche de l'adaptateur et coopère en premier avec l'adaptateur. Le crochet 50 est engagé dans un logement 51 de l'adaptateur 26'. L'extrémité longitudinale intérieure 28b"' de la pièce terminale 28"' est alors rabattue sur l'adaptateur pour achever l'accouplement et entraîner l'engagement des portions d'engagement 27' avec les encoches 38"', par encliquetage élastique. Les portions d'engagement sont par exemple situées à l'extrémité d'une patte flexible.

En variante, le balai 12 peut être monté par translation longitudinale de l'adaptateur dans la pièce terminale 28"' du bras, depuis l'extérieur vers l'intérieur.

La chape selon l'invention n'est pas limitée à un mode de fabrication particulier, elle est par exemple formée par emboutissage, soudage de tôles ou par moulage, métallique ou thermoplastique.

## Revendications

1. Chape (14a', 14a", 14a"') pour bras d'entrainement (14', 14", 14'") d'un balai (12) d'essuie-glace (10', 10"') de véhicule, en particulier automobile, ladite chape comportant :
- une partie de liaison (30', 30"') de forme générale allongée et comportant une extrémité longitudinale intérieure (30a', 30a", 30a"') destinée à être reliée à un moyen d'entraînement du bras et une extrémité longitudinale extérieure (30b', 30b", 30b"')
- une pièce terminale (28', 28", 28"') de forme générale allongée et comportant une extrémité longitudinale extérieure (28b', 28b", 28b"') et une extrémité longitudinale intérieure (28a', 28a", 28b"') qui est destinée à être située du côté dudit moyen d'entraînement,
**caractérisée en ce que** l'extrémité longitudinale extérieure (30b', 30b", 30b"') de ladite partie de liaison (30', 30"') est reliée à ladite pièce terminale (28', 28", 28"'), dans une zone (C) qui est écartée en direction longitudinale de ladite extrémité longitudinale intérieure (28a', 28a", 28b"') de la pièce terminale (28', 28", 28"').

2. Chape (14a', 14a", 14a"') selon la revendication 1, dans laquelle ladite zone (C) est située sensiblement au milieu, sur une moitié extérieure, sur un quart extérieur ou à l'extrémité extérieure de la pièce terminale (28', 28", 28"'), lorsque l'on considère la direction longitudinale de cette pièce terminale.

3. Chape (14a', 14a", 14a"') selon la revendication 1 ou 2, dans laquelle la pièce terminale (28', 28", 28"') comprend deux parois longitudinales latérales (32a', 32b', 32a", 32b") dont les bords longitudinaux supérieurs sont reliés entre eux par une paroi transversale supérieure (34', 34"), ladite zone (C) étant située sur l'une desdites parois longitudinales latérales.

4. Chape (14a', 14a", 14a"') selon la revendication 3, dans laquelle lesdites parois longitudinales latérales (32a', 32b', 32a", 32b") définissent entre elles un logement configuré pour recevoir au moins une partie (26, 26') d'un système de connexion du bras audit balai (12).

5. Chape (14a', 14a", 14a"') selon la revendication 4, dans laquelle ledit logement débouche en direction longitudinale sur l'extrémité longitudinale intérieure (28a', 28a", 28a"') ou l'extrémité longitudinale extérieure (28b', 28b", 28b"') de la pièce terminale (28', 28", 28'").

6. Chape (14a', 14a", 14a"') selon l'une des revendications 3 à 5, dans laquelle ladite partie de liaison (30', 30'") comprend une portion d'extrémité extérieure reliée à ladite pièce terminale (28', 28", 28"'), et dans lequel cette portion d'extrémité extérieure est située sensiblement en dessous d'un plan dans lequel s'étend ladite paroi supérieure (34', 34") de la pièce terminale.

7. Chape (14a', 14a", 14a"') selon la revendication 6, dans laquelle ladite portion d'extrémité extérieure a une forme générale courbe ou une forme en L.

8. Chape (14a', 14a", 14a"') selon l'une des revendications précédentes, dans laquelle ladite pièce terminale (28', 28"') comprend au moins un orifice (38', 38") configuré pour recevoir, par exemple par encliquetage élastique, un bouton poussoir (27) d'un système de connexion du bras audit balai, ledit au moins un orifice (38', 38") étant notamment situé sensiblement au droit de ladite zone (C), ou étant décalé longitudinalement vers l'intérieur de ladite zone.

9. Chape (14a', 14a", 14a"') selon l'une des revendications précédentes, dans laquelle ladite pièce terminale (28"') comprend au moins une encoche ou arête latérale (38"') configurée pour recevoir, par exemple par encliquetage élastique, ou pour coopérer, avec une portion d'engagement (27') d'un système de connexion du bras audit balai.

10. Chape (14a', 14a", 14a"') selon l'une des revendications précédentes, dans laquelle ladite pièce terminale (28', 28", 28"') comprend au moins un doigt ou crochet extérieur (50) configuré pour être engagé dans un logement (51) d'un système de connexion du bras audit balai.

11. Chape (14a', 14a", 14a"') selon l'une des revendications précédentes, réalisée d'une seule pièce avec une tige et un carter, par exemple formée par emboutissage, soudage de tôles ou par moulage.

12. Bras (14', 14", 14"') comportant une chape selon l'une quelconque des revendications précédentes.

13. Ensemble comportant un bras (14', 14", 14"') selon la revendication précédente et un système de connexion dudit bras à un balai d'essuie-glace (12), le système de connexion comportant notamment deux organes articulés l'un sur l'autre autour d'un axe d'articulation (Y), dans lequel ledit axe d'articulation est situé sensiblement au droit de ladite zone (C), ou est décalé longitudinalement vers l'intérieur de ladite zone.

14. Essuie-glace (10', 10"') de véhicule, en particulier automobile, comportant un balai (12) d'essuie-glace et un bras (14', 14", 14'") selon la revendication 12.

## Patentansprüche

1. Halterung (14a', 14a", 14a"') für den Antriebsarm (14', 14", 14"') eines Blatts (12) eines Scheibenwischers (10', 10"') eines Fahrzeugs, insbesondere eines Kraftfahrzeugs, wobei die Halterung Folgendes umfasst:
- einen Verbindungsabschnitt (30', 30"') allgemein länglicher Form, der ein inneres Längsende (30a', 30a", 30a"') umfasst, das dazu bestimmt ist, mit einem Antriebsmittel des Arms und einem äußeren Längsende (30b', 30b", 30b"') verbunden zu sein,
- ein Endstück (28', 28", 28"') allgemein länglicher Form, das ein äußeres Längsende (28b', 28b", 28b"') und ein inneres Längsende (28a', 28a", 28b"') umfasst, das dazu bestimmt ist, sich neben dem Antriebsmittel zu befinden,
**dadurch gekennzeichnet, dass** das äußere Längsende (30b', 30b", 30b"') des Verbindungsabschnitts (30', 30"') in einer Zone (C), die in Längsrichtung vom inneren Längsende (28a', 28a", 28b"') des Endstücks (28', 28", 28"') beabstandet ist, mit dem Endstück (28', 28", 28"') verbunden ist.

2. Halterung (14a', 14a", 14a"') nach Anspruch 1, wobei die Zone (C) sich im Wesentlichen in der Mitte, auf einer äußeren Hälfte, auf einem äußeren Viertel oder am äußeren Ende des Endstücks (28', 28", 28"') befindet, wenn man die Längsrichtung dieses Endstücks betrachtet.

3. Halterung (14a', 14a", 14a"') nach Anspruch 1 oder 2, wobei das Endstück (28', 28", 28"') zwei seitliche Längswände (32a', 32b', 32a", 32b") beinhaltet, deren obere Längskanten untereinander durch eine obere Querwand (34', 34") verbunden sind, wobei sich die Zone (C) auf einer der seitlichen Längswände befindet.

4. Halterung (14a', 14a", 14a"') nach Anspruch 3, wobei die seitlichen Längswände (32a', 32b', 32a", 32b") zwischen sich eine Aufnahme definieren, die dazu ausgelegt ist, mindestens einen Abschnitt (26, 26') eines Systems zur Verbindung des Arms mit dem Blatt (12) zu aufzunehmen.

5. Halterung (14a', 14a", 14a"') nach Anspruch 4, wobei die Aufnahme in Längsrichtung in das innere Längsende (28a', 28a", 28a"') oder das äußere Längsende (28b', 28b", 28b'") des Endstücks (28', 28", 28'") mündet.

6. Halterung (14a', 14a", 14a'") nach einem der Ansprüche 3 bis 5, wobei der Verbindungsabschnitt (30', 30'") einen äußeren Endabschnitt beinhaltet, der mit dem Endstück (28', 28", 28'") verbunden ist, und wobei dieser äußere Endabschnitt sich im Wesentlichen unterhalb einer Ebene befindet, in der sich die obere Wand (34', 34") des Endstücks erstreckt.

7. Halterung (14a', 14a", 14a'") nach Anspruch 6, wobei der äußere Endabschnitt eine allgemein gekrümmte Form oder eine L-Form aufweist.

8. Halterung (14a', 14a", 14a'") nach einem der vorhergehenden Ansprüche, wobei das Endstück (28', 28'") mindestens eine Öffnung (38', 38") beinhaltet, die dazu ausgelegt ist, beispielsweise durch elastisches Einrasten einen Druckknopf (27) eines Systems zur Verbindung des Arms mit dem Blatt aufzunehmen, wobei sich die mindestens eine Öffnung (38', 38") insbesondere im Wesentlichen auf Höhe der Zone (C) befindet oder längs in Richtung des Inneren der Zone versetzt ist.

9. Halterung (14a', 14a", 14a"') nach einem der vorhergehenden Ansprüche, wobei das Endstück (28"') mindestens eine seitliche Einkerbung oder Kante (38"') beinhaltet, die dazu ausgelegt ist, beispielsweise durch elastisches Einrasten einen Eingriffsabschnitt (27') eines Systems zur Verbindung des Arms mit dem Blatt aufzunehmen oder mit einem solchen zusammenzuwirken.

10. Halterung (14a', 14a", 14a"') nach einem der vorhergehenden Ansprüche, wobei das Endstück (28', 28", 28"') mindestens einen äußeren Finger oder Haken (50) beinhaltet, der dazu ausgelegt ist, in einer Aufnahme (51) eines Systems zur Verbindung des Arms mit dem Blatt in Eingriff genommen zu werden.

11. Halterung (14a', 14a", 14a"') nach einem der vorhergehenden Ansprüche, einstückig mit einer Stange und einem Gehäuse umgesetzt, beispielsweise gebildet durch Ziehen, Blechschweißen oder durch Gießen.

12. Arm (14', 14", 14"'), umfassend eine Halterung nach einem der vorhergehenden Ansprüche.

13. Konstruktion, umfassend einen Arm (14', 14", 14"') nach dem vorhergehenden Anspruch und ein System zur Verbindung des Arms mit einem Scheibenwischerblatt (12), wobei das Verbindungssystem insbesondere zwei um eine Drehachse (Y) zueinander gelenkige Elemente umfasst, wobei sich die Drehachse im Wesentlichen auf Höhe der Zone (C) befindet oder längs in Richtung des Inneren der Zone versetzt ist.

14. Scheibenwischer (10', 10"') eines Fahrzeugs, insbesondere eines Kraftfahrzeugs, umfassend ein Blatt (12) eines Scheibenwischers und einen Arm (14', 14", 14"') nach Anspruch 12.

## Claims

1. Yoke (14a', 14a", 14a'") for drive arm (14', 14", 14'") of a wiper (12) (10', 10"') of a vehicle, in particular a motor vehicle, said yoke including:
- a connecting part (30', 30"') of elongate general shape and including an interior longitudinal end (30a', 30a", 30a"') intended to be connected to a drive means of the arm and an exterior longitudinal end (30b', 30b", 30b"'),
- a terminal part (28', 28", 28'") of elongate general shape and including an exterior longitudinal end (28b', 28b", 28b'") and an interior longitudinal end (28a', 28a", 28b'") that is intended to be situated on the side of said drive means,
**characterized in that** the exterior longitudinal end (30b', 30b", 30b"') of said connecting part (30', 30'") is connected to said terminal part (28', 28", 28'"), in a zone (C) that is longitudinally spaced from said interior longitudinal end (28a', 28a", 28b'") of the terminal part (28', 28", 28'").

2. Yoke (14a', 14a", 14a'") according to Claim 1, in which said zone (C) is substantially at the middle, on an exterior half, on an exterior quarter or at the exterior end of the terminal part (28', 28", 28"') with reference to the longitudinal direction of that terminal part.

3. Yoke (14a', 14a", 14a"') according to Claim 1 or 2, in which the terminal part (28', 28", 28"') comprises two longitudinal lateral walls (32a', 32b', 32a", 32b") the longitudinal upper edges of which are interconnected by a transverse upper wall (34', 34"), said zone (C) being situated on one of said longitudinal lateral walls.

4. Yoke (14a', 14a", 14a'") according to Claim 3, in which said longitudinal lateral walls (32a', 32b', 32a", 32b") define between them a housing configured to receive at least a part (26, 26') of a system for connection of the arm to said wiper (12).

5. Yoke (14a', 14a", 14a'") according to Claim 4, in which said housing opens longitudinally onto the interior longitudinal end (28a', 28a", 28a'") or the exterior longitudinal end (28b', 28b", 28b'") of the terminal part (28', 28", 28'").

6. Yoke (14a', 14a", 14a"') according to any one of Claims 3 to 5, in which said connecting part (30', 30'") comprises an exterior end portion connected to said terminal part (28', 28", 28'") and in which that exterior end portion is situated substantially below a plane in which said upper wall (34', 34") of the terminal part extends.

7. Yoke (14a', 14a", 14a'") according to Claim 6, in which said exterior end portion has a curved general shape or an L-shape.

8. Yoke (14a', 14a", 14a"') according to any one of the preceding claims, in which said terminal part (28', 28'") comprises at least one orifice (38', 38") configured to receive, for example by elastic clipping, a pushbutton (27) of a system for connection of the arm to said windscreen wiper, said at least one orifice (38', 38") being notably situated substantially in line with said zone (C) or being longitudinally offset toward the interior of said zone.

9. Yoke (14a', 14a", 14a'") according to any one of the preceding claims, in which said terminal part (28'") comprises at least one lateral edge or notch (38'") configured to receive, for example by elastic clipping, or to cooperate with an engagement portion (27') of a system for connection of the arm to said windscreen wiper.

10. Yoke (14a', 14a", 14a"') according to any one of the preceding claims, in which said terminal part (28', 28", 28"') comprises at least one exterior hook or finger (50) configured to be engaged in a housing (51) of a system for connection of the arm to said windscreen wiper.

11. Yoke (14a', 14a", 14a'") according to any one of the preceding claims, made in one piece with a rod and a casing, for example formed by pressing, welding of plates or by moulding.

12. Arm (14', 14", 14'") including a yoke according to any one of the preceding claims.

13. Assembly including an arm (14', 14", 14'") according to the preceding claim and a system for connection of said arm to a windscreen wiper (12), the connection system notably including two members articulated to each other about an articulation axis (Y), in which said articulation axis is situated substantially in line with said zone (C) or is longitudinally offset toward the interior of said zone.

14. Windscreen wiper system (10', 10'") for a vehicle, in particular a motor vehicle, including a wiper (12) and an arm (14', 14", 14'") according to Claim 12.
